(19) Europäisches Patentamt
European Patent Office
Office européen des brevets

(11) **EP 3 263 364 B1**

(12) **EUROPEAN PATENT SPECIFICATION**

(45) Date of publication and mention
of the grant of the patent:
**29.04.2020  Bulletin 2020/18**

(21) Application number: **16768530.4**

(22) Date of filing: **14.03.2016**

(51) Int Cl.:
*B60C 11/03* *(2006.01)*        *B60C 11/00* *(2006.01)*
*B60C 11/12* *(2006.01)*

(86) International application number:
**PCT/JP2016/058013**

(87) International publication number:
**WO 2016/152627 (29.09.2016 Gazette 2016/39)**

(54) **TIRE TREAD AND TIRE HAVING TREAD**

REIFENLAUFFLÄCHE UND REIFEN MIT LAUFFLÄCHE

BANDE DE ROULEMENT DE PNEU ET PNEU COMPORTANT LADITE BANDE DE ROULEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **24.03.2015  PCT/JP2015/058944**

(43) Date of publication of application:
**03.01.2018  Bulletin 2018/01**

(73) Proprietor: **Compagnie Générale des
Etablissements Michelin
63000 Clermont-Ferrand (FR)**

(72) Inventor: **KANEKO, Shuichi
Tokyo 163-1073 (JP)**

(74) Representative: **Regimbeau
20, rue de Chazelles
75847 Paris Cedex 17 (FR)**

(56) References cited:
**EP-A1- 1 625 950        EP-A1- 1 961 587
WO-A1-2010/032606        JP-A- H10 272 905
JP-A- 2004 034 902        JP-A- 2012 020 695
JP-A- 2013 119 306**

## Description

### Technical Field

The present invention relates to a tire tread and to a tire having said tread, and more specifically the present invention relates to a tire tread and a tire having said tread, enabling an improvement in performance on snow when the tread is brand new, while maintaining wet performance.

### Prior Art

Winter tires which are also called "studless" tires are well known as tires which can travel on winter road surfaces covered with snow or ice. Winter tires are generally provided with a plurality of narrow incisions known as sipes which open at the ground contact surface, and adhesion to a road surface in winter is improved by means of what is known as an "edge" effect and a water film-removal effect, and also by using a compound which is softer than that used for tires which are not for winter use.

Furthermore, there is a need to improve the gripping performance of these kind of studless tires on a low-friction-coefficient road surface when the tread is brand new (at the start of use of the tire).

A tire in which braking and drive performance is improved by forming narrow grooves on a tread surface of a ground contact element which makes contact with the road surface has been proposed as a means for improving gripping performance on a low-friction-coefficient road surface such as a winter road surface, and especially the gripping performance when the tread is brand new (initial period of wear) (Patent Document 1). There has also been a proposal for a tire provided with a plurality of small grooves being inclined opposite to grooves and/or sipes having both a width and a depth of 0.1 to 2.0 mm (Patent Document 5). There has also been a proposal for a tire comprising a tread portion with a large number of small grooves having such a shape as to constitute a whole or part of a wavy curve are formed on a surface of the tread portion (Patent Document 6).

Furthermore, there has been a proposal for a tire in which a plurality of dimples (depressions) are arranged on a tread surface and snow columns are formed by snow being pressed down inside the dimples (depressions), the drive performance being improved by shear stress produced by these snow columns (Patent Document 2).

Furthermore, there has also been a proposal for a tire in which a plurality of widthwise grooves extending along a tread width direction are formed, both ends of these widthwise grooves terminating within a block, and performance on snow is improved by an increase in snow column shear force (Patent Document 3).

In addition, there has been a proposal for a tire in which recesses indented from a tire surface toward a tire inward direction are formed in a partial region of the tire surface (Patent Document 4).

### Prior Art Documents

#### Patent Documents

Patent Document 1: JP 2004-034902 A
Patent Document 2: JP H05-058117 A
Patent Document 3: JP 2011-088544 A
Patent Document 4: JP 2013-169827 A
Patent Document 5: EP 1 961 587 A1
Patent Document 6: EP 1 625 950 A1

### Summary of the Invention

### Problems to be Solved by the Invention

With the tires described in Patent Documents 1 to 3, however, it is difficult to improve the density of presence of the narrow grooves, dimples and widthwise grooves, and there is a limit to improving the performance on snow; there are problems in that when the density of presence of the narrow grooves, dimples and widthwise grooves is increased, there is a reduction in rigidity in the tread surface region, and a deterioration in wet performance.

As a result, it is difficult to demonstrate a higher level of performance on ice and snow when the tread is brand new, and in particular performance on snow.

Moreover, with the tire described in Patent Document 4, the recesses provided on the tire surface are formed in such a way as to improve rolling resistance performance, and furthermore the size thereof is excessively small, so it is difficult to improve the performance on ice and snow by means of these recesses.

With the tire in Patent Document 4, it is therefore also difficult to demonstrate a higher level of performance on ice and snow when the tread is brand new, and in particular performance on snow.

The present invention has been devised in order to solve the abovementioned problems in the prior art, and the aim thereof lies in providing a tire tread and a tire having said tread, which make it possible to demonstrate a higher level of performance on ice and snow when the tread is brand new, and in particular performance on snow, while maintaining wet performance.

**Means for Solving the Problems**

In the present specification, the term "groove" means a space having a width, depth and length, formed by two opposing surfaces (wall surfaces) which do not come into contact under normal usage conditions, and by another surface (bottom surface) connecting lower end portions of said opposing surfaces.

Furthermore, the term "incision", also referred to as a "sipe", means a narrow incision formed from a tread surface inwardly in the radial direction by a thin blade having a shape like that of a knife blade, for example. The width of this "incision" at the tire surface is less than that of a transverse groove and is 2.0 mm or less, for example. The "incision" differs from a "groove" and when the tread surface constitutes a ground contact surface in contact with the road surface, it may be partially closed off.

Furthermore, the term "small recess" means an element on the ground contact surface of the tread having a maximum length of 5.0 mm or less, in a portion which opens in the ground contact surface and is indented inwardly in the tire radial direction. This "small recess" is also relatively small, with a maximum depth in the tire radial direction of 3.0 mm or less, for example.

Furthermore, the term "projected length of a small recess" means a length (mm) when a small recess present on an upper surface of a ground contact element is projected onto a plane parallel to a tire axis of rotation and perpendicular to the upper surface of the ground contact element.

Furthermore, the term "projected density of small recesses" is a value obtained by dividing the total projected length (mm) of the small recesses present on the upper surface of a ground contact element, projected on a plane parallel to the tire axis of rotation and perpendicular to the upper surface of the ground contact element, by the surface area (mm$^2$) of the upper surface of the ground contact element when the small recesses are not present, and multiplying the result by 1000, in other words:

$$(\Sigma \text{ projected length of small recesses/surface area of upper surface of ground contact element}) \times 1000.$$

Furthermore, the phrase "small recesses are regularly arranged" means that the small recesses are arranged on the upper surface of the ground contact element in a regular arrangement such as in a staggered form, lattice form, linear form or tile form, for example.

In order to achieve the abovementioned aim, the present invention provides a tire tread comprising: a plurality of ground contact elements which are defined by a plurality of grooves formed on a ground contact surface in contact with a road surface when a tire is rolling, and having an upper surface forming a portion of the ground contact surface; and a plurality of small recesses which open at the upper surface, are indented inwardly in the tire radial direction, and are not in communication with each other,

the depth h of the small recesses being between 0.15 mm and 1.5 mm when the tread is brand new, and

a projected density of the small recesses being 200 or greater, the projected density being a value obtained by dividing the total projected length LP (mm) of the small recesses present on the upper surface, projected on a plane parallel to the tire axis of rotation and perpendicular to the upper surface, by the surface area (mm$^2$) of the upper surface when the small recesses are not present, and multiplying the result by 1000, , the small recesses comprising a transverse sectional shape having a short direction length and a long direction length, a projected length projected on a plane parallel to the tire axis of rotation and perpendicular to the upper surface being greater than the short direction length, the long direction length being between 0.15 mm and 3.0 mm.

According to the present invention configured in the manner described above, the projected density of the small recesses on the upper surface of the ground contact elements is 200 or greater, and it is possible as a result to enhance what is known as the "edge effect" acting on an icy and snowy road surface, and in particular a snowy road surface, and the performance on ice and snow when the tread is brand new is improved, especially the performance on snow.

It should be noted that the projected density of the small recesses on the upper surface of the ground contact elements is preferably 250 or greater, more preferably 300 or greater, and even more preferably between 350 and 600.

In addition, by adopting a configuration in which the plurality of small recesses opening at the upper surface of the ground contact elements are not in communication, this restricts a reduction in the rigidity in the surface region of the ground contact surface. As a result, minute inward collapse in the surface region of the ground contact surface is restricted, and the wet performance is maintained.

Furthermore, by setting the depth h of the small recesses at between 0.15 mm and 1.5 mm when the tread is brand new, it is possible to cause the small recesses to act as a space for taking in grains of snow, and it is possible to improve the performance on snow when the tread is brand new while maintaining the wet performance.

If the depth h of the small recesses is less than 0.15 mm when the tread is brand new, grains of snow are not readily taken in by the small recesses and there is a risk of it not being possible to adequately improve the performance on snow. On the other hand, if the depth h of the small recesses is greater than 1.5 mm when the tire is brand new, there is a reduction in rigidity in the surface region of the ground contact surface and minute inward collapse in the surface region of the ground contact surface is not readily restricted, so there is a risk of a deterioration in the wet performance. The abovementioned range is therefore preferred.

Furthermore, the depth h of the small recesses is preferably between 0.2 mm and 1.5 mm when the tread is brand new, and more preferably between 0.3 mm and 1.0 mm.

According to the present invention, the small recesses are preferably not in communication with the grooves provided in the ground contact surface.

A mode having the configuration described above makes it possible to more reliably restrict a localized reduction in rigidity in the surface region of the ground contact surface by virtue of the fact that the small recesses are not in communication with the grooves, and as a result it is possible to maintain the wet performance more reliably while envisaging an improvement in performance on snow afforded by the small recesses when the tread is brand new.

For the same reason as given above, the small recesses are preferably not in communication with narrow incisions either, when such narrow incisions are provided in the ground contact elements.

According to the present invention, the small recesses are preferably regularly arranged on the upper surface of the ground contact elements.

A mode having the configuration described above makes it possible to restrict concentration of stress in a portion of the upper surface of the ground contact elements, and as a result it is possible to more reliably restrict minute inward collapse in the surface region of the ground contact surface. Furthermore, grains of snow can be taken in by the small recesses more efficiently so it is possible to maintain the wet performance while envisaging an improvement in the performance on snow afforded by the small recesses when the tread is brand new.

According to the present invention, the small recesses comprise a transverse sectional shape having a short direction length $LS$ and a long direction length $LL$, the projected length $LP$ projected on a plane parallel to the tire axis of rotation and perpendicular to the upper surface of the ground contact elements being greater than the short direction length $LS$.

According to a mode having the configuration described above, the small recesses have a shape that undergoes greater deformation but is elongate in a favorable manner, so it is possible to more reliably restrict a reduction in rigidity in the surface region of the ground contact surface and as a result it is possible to more reliably restrict minute inward collapse in the surface region of the ground contact surface. Furthermore, the small recesses are arranged in such a way that the long direction thereof forms a relatively small angle with respect to the tire circumferential direction, and as a result it is possible to more reliably achieve what is known as the edge effect afforded by the edges of the small recesses that act on icy and snowy road surfaces, and especially snowy road surfaces; it is therefore possible to maintain the wet performance while envisaging an improvement in the performance on snow afforded by the small recesses when the tread is brand new.

According to the present invention, the long direction length $LL$ of the small recesses is between 0.15 mm and 3.0 mm.

A mode having the configuration described above makes it possible to maintain the wet performance while reliably improving the performance on snow afforded by the small recesses when the tread is brand new. That is to say, if the long direction length $LL$ of the small recesses is less than 0.15 mm, grains of snow are not readily taken in by the small recesses and there is a risk of it being difficult to improve the performance on snow. On the other hand, if the long direction length $LL$ of the small recesses is greater than 3.0 mm, not only does it become difficult to increase the density of the small recesses, it is also difficult to restrict a reduction in the rigidity in the surface region of the ground contact surface caused by the small recesses so there is a risk of it being difficult to maintain the wet performance while improving the performance on snow.

Moreover, the long direction length $LL$ of the small recesses is more preferably between 0.5 mm and 2.5 mm, and even more preferably between 1.0 mm and 2.0 mm.

According to the present invention, the short direction length $LS$ of the small recesses is preferably between 0.15 mm and 0.5 mm.

A mode having the configuration described above makes it possible to maintain the wet performance while reliably improving the performance on snow afforded by the small recesses when the tread is brand new. That is to say, if the short direction length LS of the small recesses is less than 0.15 mm, grains of snow are not readily taken in by the small recesses and there is a risk of it being difficult to improve the performance on snow. On the other hand, if the short direction length LS of the small recesses is greater than 0.5 mm, not only does it become difficult to increase the density of the small recesses, it is also difficult to restrict a reduction in the rigidity in the surface region of the ground contact surface caused by the small recesses so there is a risk of it being difficult to maintain the wet performance while improving the performance on snow.

Moreover, the short direction length LS of the small recesses is more preferably between 0.2 mm and 0.4 mm, and even more preferably between 0.25 mm and 0.3 mm.

According to the present invention, an angle A (absolute value) between the long direction of the small recesses and the tire axial direction is preferably 45° or less.

A mode having the configuration described above makes it possible to maintain the wet performance while reliably improving the performance on snow afforded by the small recesses when the tread is brand new. That is to say, if the angle A (absolute value) between the long direction of the small recesses and the tire axial direction is greater than 45°, there is a risk of it being difficult to improve the performance on snow afforded by the recesses because the edge effect afforded by the small recesses decreases in relation to the tire circumferential direction.

Moreover, the angle A (absolute value) between the long direction of the small recesses and the tire axial direction is more preferably 30° or less, and even more preferably between 0° and 20°.

According to the present invention, the ground contact elements further comprise a narrow incision which opens at the upper surface of the ground contact elements and extends inwardly in the tire radial direction.

According to a mode having the configuration described above, the ground contact elements are provided with a narrow incision which opens at the upper surface of the ground contact elements and extends inwardly in the tire radial direction, which facilitates adjustment of the rigidity of the ground contact elements as a whole, and as a result the small recesses can be made to act more effectively. Furthermore, not only can the narrow incision act as a space for temporarily storing water on a wet road surface, it is also possible on a snowy road surface for the edge effect afforded by the narrow incision to act on said snowy road surface, and therefore it is possible to maintain the wet performance while improving the performance on snow to a greater degree when the tread is brand new.

## Advantage of the Invention

The present invention having the configuration described above provides a tire tread and a tire comprising said tread which make it possible to demonstrate higher-level performance on snow when the tread is brand new, while restricting a deterioration in wet performance and employing small recesses.

## Brief Description of the Drawings

[Fig. 1] is an oblique view schematically illustrating a portion of a tire tread according to a first mode of embodiment of the present invention;
[Fig. 2] is an enlarged plan view of a portion illustrated by II in fig. 1;
[Fig. 3] is an enlargement in cross section along the line III-III in fig. 2;
[Fig. 4] is an enlarged plan view of a portion of a tire tread according to a second mode of embodiment of the present invention, corresponding to the portion illustrated by II in fig. 1; and
[Fig. 5] is an enlarged plan view of a portion of a tire tread according to a third mode of embodiment of the present invention, corresponding to the portion illustrated by II in fig. 1.

## Mode of Embodiment of the Invention

A tire tread and a tire employing said tread in accordance with a preferred mode of embodiment of the present invention will be described below with reference to the appended drawings.

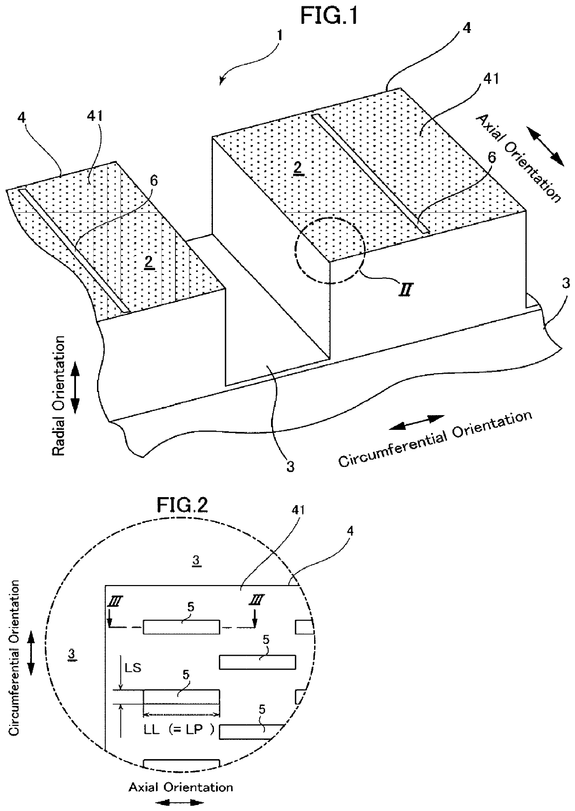

The configuration of a tire tread according to a first mode of embodiment of the present invention will be described first of all with reference to fig. 1 to 3. It should be noted that a tire having a size of 205/55R16 is an example of the tire to which a tread 1 according to this mode of embodiment is applied.

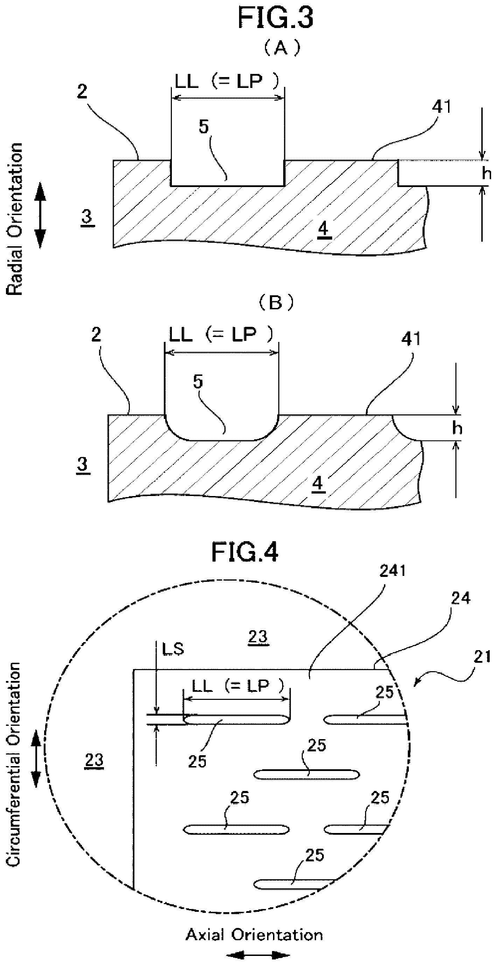

Fig. 1 is an oblique view schematically illustrating a portion of the tire tread according to the first mode of embodiment of the present invention, fig. 2 is an enlarged plan view of a portion illustrated by II in fig. 1, and fig. 3 is an enlargement in cross section along the line III-III in fig. 2.

It should be noted that in fig. 1 to 3, the direction of the arrows marked as "Circumferential Orientation" denotes the tire circumferential direction (direction of rotation), the direction of the arrows marked as "Axial Orientation" denotes the tire axial direction, and the direction of the arrows marked as "Radial Orientation" denotes the tire radial direction.

As illustrated in fig. 1, the tread 1 comprises a ground contact surface 2 which makes contact with the road surface when the tire is rolling. The ground contact surface 2 is formed with a plurality of grooves 3 which open at the ground contact surface 2 and extend in the tire circumferential direction and the tire axial direction, a plurality of ground contact elements 4 being defined by these grooves 3.

The ground contact elements 4 comprise an upper surface 41 disposed on an outermost portion in the tire radial direction and forming a portion of the ground contact surface 2, and one narrow incision 6 which opens at the upper surface 41 and extends inwardly in the tire radial direction. The narrow incision 6 extends in the tire axial direction but is not in communication with the grooves 3.

Small recesses 5 provided in the upper surface 41 of the ground contact elements 4 will be described next. As illustrated in fig. 2, a plurality of the small recesses 5 which open at the upper surface 41 of the ground contact elements 4 and are indented inwardly in the tire radial direction are regularly arranged over the whole of the upper surface 41 of the ground contact elements 4. The small recesses 5 are formed in such a way as not to be in communication with each other and not to be in communication with the grooves 3 either, and furthermore not to be in communication with the narrow incision 6, although this is not depicted.

The small recesses 5 have an elongate shape when seen in a plan view (i.e., a transverse sectional shape) on the upper surface 41 of the ground contact elements 4, this shape being an elongate rectangle according to this mode of embodiment.

The long direction length $LL$ in the transverse section of the small recesses 5 is preferably between 0.15 mm and 3.0 mm, more preferably between 0.5 mm and 2.5 mm, and even more preferably between 1.0 mm and 2.0 mm.

Furthermore, the short direction length $LS$ in the transverse section of the small recesses 5 is preferably between 0.15 mm and 0.5 mm, more preferably between 0.2 mm and 0.4 mm, and even more preferably between 0.25 mm and 0.3 mm.

The small recesses according to this mode of embodiment have a long direction length $LL$ of 2.0 mm and a short direction length $LS$ of 0.5 mm, and substantially the same cross-sectional shape from the opening to a bottom portion.

Furthermore, as illustrated in fig. 3, the small recesses 5 have a length extending from the upper surface 41 of the ground contact elements 4 in the tire radial direction, in other words a depth $h$. This depth $h$ is preferably between 0.2 mm and 1.5 mm, and more preferably between 0.3 mm and 1.0 mm. According to this mode of embodiment, the depth $h$ is 0.5 mm.

According to this mode of embodiment, the small recesses 5 are arranged in such a way that the long direction extends in the tire axial direction and the short direction extends in the tire circumferential direction. That is to say, according to this mode of embodiment, the short direction length $LS$ of the small recesses 5 forms the tire circumferential length and the long direction length $LL$ forms the tire axial length.

According to this mode of embodiment, the small recesses 5 are arranged in such a way that the long direction axis thereof forms an angle $A$ (not depicted) of 0° with the tire axial direction, i.e. in such a way that the long direction axis extends in the tire axial direction. The angle $A$ (absolute value) between the long direction axis of the small recesses 5 and the tire axial direction is preferably 45° or less, more preferably 30° or less, and even more preferably between 0° and 20°.

Furthermore, the long direction length $LL$ is equal to the projected length $LP$ of the small recesses 5, projected on a plane parallel to the tire axis of rotation of the small recesses 5 and perpendicular to the upper surface 41 of the ground contact elements 4. The projected length $LP$ is therefore greater than the short direction length $LS$ of the small recesses 5.

The plurality of small recesses 5 are regularly arranged in tile form on the upper surface 41 of the ground contact elements 4. That is to say, as illustrated in fig. 2, rows in which the plurality of small recesses 5 are arranged linearly in the axial direction at intervals substantially equal to the long direction length $LL$ are provided, and a plurality of rows are arranged in the circumferential direction. Each row is arranged in such a way that the small recesses 5 included in that row are arranged with an offset in such a way as to be aligned in the circumferential direction with a portion between the adjacent small recesses 5 within an adjacent row.

The small recesses 5 are preferably provided in such a way that the projected density thereof (a value obtained by dividing the total projected length $LP$ (mm) of the small recesses 5 present on the upper surface 41 of the ground contact elements 4, projected on a plane parallel to the tire axis of rotation and perpendicular to the upper surface 41 of the ground contact elements 4, by the surface area ($mm^2$) of the upper surface 41 of the ground contact elements 4 when the small recesses 5 are not present, and multiplying the result by 1000) is 200 or greater. The projected density is preferably 250 or greater, more preferably 300 or greater, and even more preferably between 350 and 600. The projected density of the small recesses 5 according to this mode of embodiment is 447.

The small recesses 5 preferably have a shape in which the long direction length $LL$ is constant across the tire radial direction, as illustrated in fig. 3(A), but they may equally have a shape such that the long direction length $LL$

gradually decreases at inward ends in the tire radial direction, as illustrated in fig. 3(B), with the aim of improving processability and ensuring greater rigidity in the surface region.

The effect of the tread according to this mode of embodiment will be described next.

With the tread 1 according to this mode of embodiment, what is known as the edge effect acting on an icy and snowy road surface, and especially a snowy road surface, is enhanced by the small recesses 5 on the upper surface 41 of the ground contact elements 4 for which the projected density is 200 or greater, and it is possible as a result to improve the performance on ice and snow when the tread 1 is brand new, and in particular the performance on snow.

According to this mode of embodiment, the plurality of small recesses 5 are not in communication with each other so it is possible to restrict a reduction in rigidity in the surface region of the ground contact surface and to restrict minute inward collapse in the surface region of the ground contact surface. It is possible to maintain the wet performance as a result. This effect is more reliable when the small recesses 5 are configured in such a way as not to communicate with the grooves 3 and the narrow incision 6.

According to the "Japanese Dictionary of Snow and Ice - New Edition" (Japanese Society of Snow and Ice, ISBN 9784772241731, p. 248, Appendix V), the size of snow grains in "powder snow" and compacted snow which are frequently encountered in snow and ice on road surfaces is normally 0.05 mm-0.3 mm. By setting the depth $h$ of the small recesses 5 provided in the upper surface 41 of the ground contact elements 4 at between 0.15 mm and 1.5 mm when the tread is brand new, it is possible to cause the small recesses 5 to act as a space for taking in the grains of snow while reliably restricting a reduction in rigidity in the surface region of the ground contact surface caused by the small recesses 5, and therefore it is possible to improve the performance on snow when the tread 1 is brand new while maintaining the wet performance as a result.

The small recesses 5 have a shape that undergoes greater deformation but is elongate in a favorable manner because they include the short direction length $LS$ and the long direction length $LL$, and by adopting a configuration such that the projected length $LP$ of the small recesses 5 projected on a plane parallel to the tire axis of rotation and perpendicular to the upper surface 41 of the ground contact elements 4 is greater than the short direction length $LS$ of the small recesses 5, it is possible to more reliably restrict a reduction in rigidity in the surface region of the ground contact surface and as a result it is possible to more reliably restrict minute inward collapse in the surface region of the ground contact surface.

Furthermore, by arranging the long direction of the small recesses 5 in such a way as to act reliably in the tire circumferential direction, it is possible to more reliably achieve what is known as the edge effect by means of the small recesses 5 acting on an icy and snowy road surface, and especially a snowy road surface, so it is possible to maintain the wet performance while envisaging an improvement in the performance on snow afforded by the small recesses 5 when the tread 1 is brand new.

By setting the long direction length $LL$ of the small recesses 5 at between 0.15 mm and 3.0 mm, or setting the long direction length $LL$ of the small recesses 5 at between 0.5 mm and 2.5 mm, it is possible to facilitate an improvement in the projected density of the small recesses 5 while maintaining a space enabling grains of snow to be taken in more reliably by the small recesses 5, and as a result it is possible to more reliably maintain the wet performance while envisaging an improvement in the performance on snow afforded by the small recesses 5 when the tread 1 is brand new.

That is to say, if the long direction length $LL$ of the small recesses 5 is less than 0.15 mm, grains of snow are not readily taken in by the small recesses 5 and there is a risk of it being difficult to improve the performance on snow. On the other hand, if the long direction length $LL$ of the small recesses 5 is greater than 3.0 mm, not only does it become difficult to increase the density of the small recesses 5, it is also difficult to restrict a reduction in the rigidity in the surface region of the ground contact surface caused by the small recesses 5 so there is a risk of it being difficult to maintain the wet performance while improving the performance on snow.

Furthermore, if the short direction length $LS$ of the small recesses 5 is less than 0.15 mm, grains of snow are not readily taken in by the small recesses 5 and there is a risk of it being difficult to improve the performance on snow. On the other hand, if the short direction length $LS$ of the small recesses 5 is greater than 0.5 mm, not only does it become difficult to increase the density of the small recesses 5, it is also difficult to restrict a reduction in the rigidity in the surface region of the ground contact surface caused by the small recesses 5 so there is a risk of it being difficult to maintain the wet performance while improving the performance on snow.

The small recesses 5 arranged regularly over the whole of the upper surface 41 of the ground contact elements 4 make it possible to restrict concentration of stress in a portion of the upper surface 41 of the ground contact elements 4, and as a result it is possible to more reliably restrict minute inward collapse in the surface region of the ground contact surface. Furthermore, grains of snow can be taken in by the small recesses 5 more efficiently so it is possible to maintain the wet performance while envisaging an improvement in the performance on snow afforded by the small recesses 5 when the tread 1 is brand new.

The narrow incision 6 which opens at the upper surface 41 of the ground contact elements 4 and is provided on the ground contact elements 4 in such a way as to extend inwardly in the tire radial direction facilitates adjustment of the rigidity of the ground contact elements 4 as a whole, and as a result the small recesses 5 can be made to act more effectively. Furthermore, not only can the narrow incision 6 act as a space for temporarily storing water on a wet road surface, it is also possible on a snowy road surface for the edge effect afforded by the narrow incision 6 to act on said snowy road surface, and therefore it is possible to maintain the wet performance while improving the performance on snow to a greater degree when the tread 1 is brand new.

A variant example of this mode of embodiment will be described next.

The shape (transverse sectional shape) of the small recesses 5 when seen in a plan view is rectangular in the mode of embodiment described above, but a bale shape, a diamond shape or an elliptical shape, etc., is equally feasible.

Furthermore, the plurality of small recesses 5 preferably have the same dimensions and shape within the same ground contact element 4, but they may equally be varied with the aim of improving various aspects of tire performance.

Furthermore, the narrow incision 6 is provided in the mode of embodiment described above, but it is equally possible not to provide the narrow incision 6. Furthermore, the narrow incision 6 may equally have a shape in which one or both ends at the grooves 3 are open, a serrated shape when seen in a plan view of the upper surface 41 of the ground contact elements 4, or a shape combining serrations and straight lines. Furthermore, the narrow incision may equally have what is known as a three-dimensional shape with serrations in the tire radial direction.

A tire tread according to a second mode of embodiment of the present invention will be described next with reference to fig. 4.

Fig. 4 is an enlarged plan view of a portion of a tire tread according to the second mode of embodiment of the present invention, corresponding to the portion illustrated by II in fig. 1.

In the same way as in fig. 2, the direction of the arrows in fig. 4 marked as "Circumferential Orientation" also denotes the tire circumferential direction (direction of rotation), and the direction of the arrows marked as "Axial Orientation" also denotes the tire axial direction. It should be noted that the description of the second mode of embodiment will mainly relate only to those parts which are different from the tread of the abovementioned first mode of embodiment, and constituent elements which are the same will not be described again.

As illustrated in fig. 4 and in the same way as in the tread 1 of the abovementioned first mode of embodiment, a tread 21 according to the second mode of embodiment has a configuration in which a plurality of small recesses 25 which open at an upper surface 241 of ground contact elements 24, are indented inwardly in the tire radial direction and are not in communication with each other are formed on the upper surface 241 of the ground contact elements 24.

The small recesses 25 have a shape when seen in a plan view of the upper surface 241 of the ground contact elements 24 (transverse sectional shape) which is substantially rectangular with both ends being arc-shaped (elongate bale-shaped). In the tread 21 according to the second mode of embodiment, the long direction length $LL$ of the small recesses 25 is 2.0 mm and the short direction length $LS$ is 0.25 mm. Furthermore, the depth $h$ of the small recesses 25 is 0.5 mm.

The small recesses 25 are oriented in such a way that the long direction thereof is parallel to the tire axial direction and the short direction is parallel to the tire circumferential direction, and they are arranged regularly in a staggered form on the upper surface 241 of the ground contact elements 24. As a result, the angle A (not depicted) between the long direction of the small recesses 25 and the tire axial direction is 0°.

The short direction length $LS$ thus forms the tire circumferential direction length and the long direction length $LL$ forms the tire axial direction length, so the projected length $LP$ of the small recesses 25 projected on a plane parallel to the tire axis of rotation and perpendicular to the upper surface 241 of the ground contact elements 24 is greater than the short direction length $LS$ of the small recesses 25.

Furthermore, the long direction length $LL$ is equal to the projected length $LP$ of the small recesses 25 projected on a plane parallel to the tire axis of rotation of the small recesses 25 and perpendicular to the upper surface 41 of the ground contact elements 24 in the second mode of embodiment.

The small recesses 25 are provided in such a way that the projected density thereof is 200 or greater. The projected density of the small recesses 25 is 528 in the tread 21 according to this second mode of embodiment.

The small recesses 25 are formed in such a way as not to be in communication with grooves 23, in the same way as with the small recesses 5 in the first mode of embodiment, and also in such a way as not to be in communication with a narrow incision, although this is not depicted.

The effect of the tread according to the second mode of embodiment will be described next.

The tread 21 according to the second mode of embodiment comprises the small recesses 25 which are regularly arranged in a staggered form, and as a result it is possible to improve the projected density of the small recesses 25 on the upper surface 241 of the ground contact elements 24 while restricting concentration of stress in a portion of the upper surface 241 of the ground contact elements 24, and by enhancing what is known as the edge effect acting on an icy and snowy road surface, and especially a snowy road surface, it is possible to improve the performance on ice and snow when the tread 21 is brand new, and in particular the performance on snow.

Furthermore, at the same time, the short direction length $LS$ of the small recesses 25 is shorter within a predetermined range, and the small recesses 25 have an elongate transverse sectional shape, whereby it is possible to more reliably restrict minute inward collapse at the surface region of the ground contact surface so it is possible to more reliably maintain the wet performance while envisaging an improvement in performance on snow afforded by the small recesses 25 when the tread 21 is brand new.

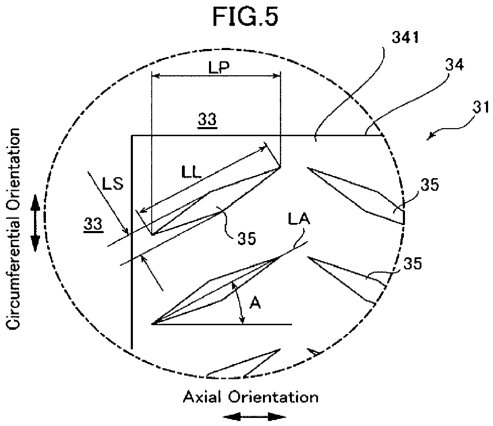

A tire tread according to a third mode of embodiment of the present invention will be described next with reference to fig. 5. Fig. 5 is an enlarged plan view of a portion of a tire tread according to a third mode of embodiment of the present invention, corresponding to the portion illustrated by II in fig. 1.

In the same way as in fig. 2, the direction of the arrows in fig. 5 marked as "Circumferential Orientation" also denotes the tire circumferential direction (direction of rotation), and the direction of the arrows marked as "Axial Orientation" also denotes the tire axial direction. It should be noted that the description of the third mode of embodiment will mainly relate only to those parts which are different from the treads of the abovementioned first mode of embodiment and second mode of embodiment, and constituent elements which are the same will not be described again.

As illustrated in fig. 5 and in the same way as in the treads of the abovementioned first and second modes of embodiment, a tread 31 according to the third mode of embodiment has a configuration in which a plurality of small recesses 35 which open at an upper surface 341 of ground contact elements 34, are indented inwardly in the tire radial direction and are not in communication with each other are formed on the upper surface 341 of the ground contact elements 34.

The small recesses 35 have an elongate diamond shape when seen in a plan view (a transverse sectional shape) of the upper surface 341 of the ground contact elements 34. In the tread 31 according to the third mode of embodiment, the long direction length LL is 2.0 mm and the short direction length LS is 0.5 mm. The depth h of the small recesses 35 is 0.75 mm.

The small recesses 35 are oriented in the tire axial direction on the upper surface 341 of the ground contact elements 34 in such a way that the long direction of the small recesses 35 is inclined with respect to the tire axial direction, and they are regularly arranged in alignment in the tire circumferential direction and the tire axial direction. According to this mode of embodiment, the angle A (absolute value) between the long direction axis (LA) of the small recesses 35 and the tire axial direction is 30°.

According to this mode of embodiment, the projected length LP of the small recesses 35 projected on a plane parallel to the tire axis of rotation and perpendicular to the upper surface 341 of the ground contact elements 34 is greater than the short direction length LS of the small recesses 35.

The small recesses 35 provided on the upper surface 341 of the ground contact elements 34 are provided in such a way as to have a projected density of 200 or greater. According to the third mode of embodiment, the projected density of the small recesses 35 is 484.

The small recesses 35 are formed in such a way as not to be in communication with the grooves 33, and also so as not to be in communication with a narrow incision, although this is not depicted.

The effect of the tread according to the third mode of embodiment will be described next.

The tread 31 according to the third mode of embodiment comprises the small recesses 35 which are regularly arranged in alignment in the tire circumferential direction and the tire axial direction, and as a result it is possible to improve the projected density of the small recesses 35 on the upper surface 341 of the ground contact elements 34 while restricting concentration of stress in a portion of the upper surface 341 of the ground contact elements 34, and by enhancing what is known as the edge effect acting on an icy and snowy road surface, and especially a snowy road surface, it is possible to improve the performance on ice and snow when the tread 31 is brand new, and in particular the performance on snow.

Furthermore, at the same time, the angle A (absolute value) between the long direction axis (LA) of the small recesses 35 and the tire axial direction is set at 45° or less, and as a result it is possible to cause the edge effect afforded by the small recesses 35 to act in the tire axial direction while also reliably acting in the tire circumferential direction, and as a result it is possible to more reliably maintain the wet performance while envisaging an improvement in the performance on snow afforded by the small recesses 35 when the tread 31 is brand new.

Preferred modes of embodiment of the present invention have been described above, but the present invention is not limited to the modes of embodiment illustrated and a number of modifications and variations are feasible within the scope of the claims.

**Exemplary Embodiments**

Test results employing a tire comprising the tire tread according to exemplary embodiments of the present invention will be described next.

Using the arrangement of small recesses according to the first mode of embodiment as a base, a test on snow was carried out using a tire having a tire tread according to exemplary embodiments 1-9, in which the density, depth, long direction length and short direction length of the small recesses were varied, and using a tire having a tire tread without small recesses (conventional example) as a comparative example.

The tire size of the tires used for the test according to exemplary embodiments 1-9 and the conventional example was 205/55R16 in all cases, the tires being mounted on a 6.5J×16 wheel with an internal pressure set at 200 kPa.

Test method (performance on snow):

Unused test tires were mounted on four wheels of a front-wheel-drive vehicle having a displacement of 2000 cc, using the abovementioned rim and internal pressure, and the vehicle traveled with one driver on a road surface of compacted snow, sudden braking was performed from a speed of 60 km/h to actuate the anti-lock braking system (ABS), and the deceleration was measured. The measured results are shown in table 1. In table 1, the measured values are represented by an index with the conventional example being 100, and a higher numerical value is more favorable.

[Table 1]

|  | Ex. Emb. 1 | Ex. Emb. 2 | Ex. Emb. 3 | Ex. Emb. 4 | Ex. Emb. 5 |
|---|---|---|---|---|---|
| Small recess density | 447 | 447 | 447 | 484 | 241 |
| Small recess depth (mm) | 0.25 | 0.5 | 0.75 | 1 | 1 |
| Small recess long length (mm) | 2 | 2 | 2 | 2 | 2 |
| Small recess short length (mm) | 0.25 | 0.25 | 0.25 | 0.5 | 0.5 |
| Performance on snow (index) | 106 | 106 | 108 | 108 | 106 |
|  | Ex. Emb. 6 | Ex. Emb. 7 | Ex. Emb. 8 | Ex. Emb. 9 | Conv. Ex. |
| Small recess density | 700 | 484 | 484 | 484 | - |
| Small recess depth (mm) | 1 | 0.5 | 0.25 | 0.5 | - |
| Small recess long length (mm) | 2 | 2 | 2 | 2 | - |
| Small recess short length (mm) | 0.5 | 0.5 | 0.25 | 0.25 | - |
| Performance on snow (index) | 107 | 106 | 104 | 105 | 100 |
| Ex. Emb. = Exemplary Embodiment Conv. Ex. = Conventional Example | | | | | |

A wet test was then carried out using tires having the tire tread according to abovementioned exemplary embodiments 1-4 and a tire having a tire tread without small recesses (conventional example) as a comparative example.
The tire size of the tires used for the test according to exemplary embodiments 1-4 and the conventional example was 205/55R16 in all cases, the tires being mounted on a 6.5J×16 wheel with an internal pressure set at 200 kPa.

Test method (wet performance):

Unused test tires were mounted on four wheels of a front-wheel-drive vehicle having a displacement of 2000 cc, using the abovementioned rim and internal pressure, and the vehicle traveled with one driver on a wet road surface with a water depth of 2 mm, sudden braking was performed from a speed of 60 km/h to actuate the anti-lock braking system (ABS), and the braking distance until stoppage was measured. The measured results are shown in table 2. In table 2, the measured values are represented by an index with the conventional example being 100, and a higher numerical value is more favorable.

[Table 2]

|  | Ex. Emb. 1 | Ex. Emb. 2 | Ex. Emb. 3 | Ex. Emb. 4 | Conv. Ex. |
|---|---|---|---|---|---|
| Small recess density | 447 | 447 | 447 | 484 | - |
| Small recess depth (mm) | 0.25 | 0.5 | 0.75 | 1 | - |
| Small recess long length (mm) | 2 | 2 | 2 | 2 | - |
| Small recess short length (mm) | 0.25 | 0.25 | 0.25 | 0.5 | - |
| Wet performance (index) | 98 | 97 | 95 | 91 | 100 |
| Ex. Emb. = Exemplary Embodiment Conv. Ex. = Conventional Example | | | | | |

As shown in tables 1 and 2, it can be confirmed that the tire tread according to the exemplary embodiments maintains wet performance while an improvement in performance on snow when the tread is brand new can also be envisaged.

**Key to Symbols**

    1, 21, 31: Tire tread
    2: Ground contact surface
    3: Groove
    4, 24, 34: Ground contact element
    41, 241, 341: Upper surface of ground contact element
    5, 25, 35: Small recess
    6: Narrow incision

**Claims**

1. A tire tread (1) comprising:

    a plurality of ground contact elements (4) which are defined by a plurality of grooves (3) formed on a ground contact surface (2) in contact with a road surface when a tire is rolling, and having an upper surface (41) forming a portion of the ground contact surface (2); and
    a plurality of small recesses (5) which open at the upper surface (41), are indented inwardly in the tire radial direction, and are not in communication with each other,
    the depth $h$ of the small recesses (5) being between 0.15 mm and 1.5 mm when the tread (1) is brand new, and a projected density of the small recesses (5) being 200 or greater, the projected density being a value obtained by dividing the total projected length $LP$ (mm) of the small recesses (5) present on the upper surface (41) of the ground contact elements (4), projected on a plane parallel to the tire axis of rotation and perpendicular to the upper surface (41), by the surface area ($mm^2$) of the upper surface (41) when the small recesses (5) are not present, and multiplying the result by 1000,
    the small recesses (5) comprising a transverse sectional shape having a short direction length $LS$ and a long direction length $LL$, a projected length $LP$ projected on a plane parallel to the tire axis of rotation and perpendicular to the upper surface (41) being greater than the short direction length $LS$,
    said tire tread being **characterized in that** the long direction length $LL$ is between 0.15 mm and 3.0 mm.

2. The tire tread as claimed in claim 1, wherein the small recesses (5) are not in communication with the grooves (3).

3. The tire tread as claimed in claim 1 or 2, wherein the small recesses (5) are regularly arranged on the upper surface (41).

4. The tire tread as claimed in any one of claims 1 to 3, wherein the short direction length $LS$ is between 0.15 mm and 0.5 mm.

5. The tire tread as claimed in any one of claims 1 to 4, wherein the absolute value of an angle $A$ between the long direction of the small recesses (5) and the tire axial direction is 45° or less.

6. The tire tread as claimed in any one of claims 1 to 5, wherein the ground contact elements (4) further comprise a narrow incision (6) which opens at the upper surface (41) and extends inwardly in the tire radial direction.

7. A tire **characterized in that** it comprises the tread as claimed in any one of claims 1 to 6.

**Patentansprüche**

1. Reifenlauffläche (1), die Folgendes umfasst:

eine Vielzahl von Bodenkontaktelementen (4), die durch eine Vielzahl von Rillen (3) definiert sind, die auf einer Bodenkontaktfläche (2) gebildet sind, die mit einer Straßenfläche in Kontakt ist, wenn ein Reifen rollt, und eine Oberfläche (41) aufweisen, die einen Abschnitt der Bodenkontaktfläche (2) bildet; und

eine Vielzahl von kleinen Ausnehmungen (5), die auf der Oberfläche (41) öffnen, in der Reifenradialrichtung nach innen eingedrückt sind und nicht miteinander in Kommunikation stehen,

wobei die Tiefe h der kleinen Ausnehmungen (5) zwischen 0,15 mm und 1,5 mm beträgt, wenn die Lauffläche (1) brandneu ist, und

wobei eine projizierte Dichte der kleinen Ausnehmungen (5) 200 oder mehr beträgt, wobei die projizierte Dichte ein Wert ist, der durch Dividieren der gesamten projizierten Länge LP (mm) der kleinen Ausnehmungen (5), die auf der Oberfläche (41) der Bodenkontaktelemente (4) vorhanden sind, projiziert auf eine Ebene parallel zur Rotationsachse des Reifens und senkrecht zur Oberfläche (41), durch den Flächenbereich (mm²) der Oberfläche (41), wenn die kleinen Ausnehmungen (5) nicht vorhanden sind, und Multiplizieren des Ergebnisses mit 1000 erhalten wird,

wobei die kleinen Ausnehmungen (5) eine Querschnittsform mit einer kurzen Richtungslänge LS und einer langen Richtungslänge LL umfassen, wobei eine projizierte Länge LP, die auf eine Ebene parallel zur Rotationsachse des Reifens und senkrecht zur Oberfläche (41) projiziert ist, größer ist als die kurze Richtungslänge LS, wobei die Reifenlauffläche **dadurch gekennzeichnet ist, dass** die lange Richtungslänge LL zwischen 0,15 mm und 3,0 mm beträgt.

2. Reifenlauffläche nach Anspruch 1, wobei die kleinen Ausnehmungen (5) nicht mit den Rillen (3) in Kommunikation stehen.

3. Reifenlauffläche nach Anspruch 1 oder 2, wobei die kleinen Ausnehmungen (5) regelmäßig auf der Oberfläche (41) angeordnet sind.

4. Reifenlauffläche nach einem der Ansprüche 1 bis 3, wobei die kurze Richtungslänge LS zwischen 0,15 und 0,5 mm beträgt.

5. Reifenlauffläche nach einem der Ansprüche 1 bis 4, wobei der Absolutwert eines Winkels A zwischen der langen Richtung der kleinen Ausnehmungen (5) und der Reifenaxialrichtung 45° oder weniger beträgt.

6. Reifenlauffläche nach einem der Ansprüche 1 bis 5, wobei die Bodenkontaktelemente (4) ferner einen kleinen Einschnitt (6) umfassen, der sich auf der Oberfläche (41) öffnet und in die Reifenradialrichtung nach innen erstreckt.

7. Reifen, der **dadurch gekennzeichnet ist, dass** er die Lauffläche nach einem der Ansprüche 1 bis 6 umfasst.


**Revendications**

1. Bande de roulement (1) de pneu comprenant :

une pluralité d'éléments de contact avec le sol (4) qui sont définis par une pluralité de rainures (3) formées sur une surface de contact avec le sol (2) en contact avec une surface de route lorsqu'un pneu roule, et ayant une surface supérieure (41) formant une partie de la surface de contact avec le sol (2) ; et

une pluralité de petits évidements (5) qui s'ouvrent au niveau de la surface supérieure (41), sont indentés vers l'intérieur dans la direction radiale du pneu, et ne sont pas en communication entre eux,

la profondeur h des petits évidements (5) étant comprise entre 0,15 mm et 1,5 mm lorsque la bande de roulement (1) est toute neuve, et

une densité projetée des petits évidements (5) étant de 200 ou plus, la densité projetée étant une valeur obtenue en divisant la longueur projetée totale LP (mm) des petits évidements (5) présents sur la surface supérieure (41) des éléments de contact avec le sol (4), projetés sur un plan parallèle à l'axe de roulement du pneu et perpendiculaires à la surface supérieure (41), par la surface (mm²) de la surface supérieure (41) lorsque les petits évidements (5) ne sont pas présents, et en multipliant le résultat par 1000,

les petits évidements (5) comprenant une forme transversale ayant une longueur dans la direction courte LS et une longueur dans la direction longue LL, une longueur projetée LP projetée sur un plan parallèle à l'axe de rotation du pneu et perpendiculaire à la surface supérieure (41) étant supérieure à la longueur dans la direction courte LS,

ladite bande de roulement de pneu étant **caractérisée en ce que** la longueur dans la direction longue LL est comprise entre 0,15 mm et 3,0 mm.

2. Bande de roulement de pneu selon la revendication 1, dans laquelle les petits évidements (5) ne sont pas en communication avec les rainures (3).

3. Bande de roulement de pneu selon la revendication 1 ou 2, dans laquelle les petits évidements (5) sont agencés de manière régulière sur la surface supérieure (41).

4. Bande de roulement de pneu selon l'une quelconque des revendications 1 à 3, dans laquelle la longueur dans la direction courte LS est comprise entre 0,15 mm et 0,5 mm.

5. Bande de roulement de pneu selon l'une quelconque des revendications 1 à 4, dans laquelle la valeur absolue d'un angle A entre la direction longue des petits évidements (5) et la direction axiale de pneu est de 45° ou moins.

6. Bande de roulement de pneu selon l'une quelconque des revendications 1 à 5, dans laquelle les éléments de contact avec le sol (4) comprennent en outre une incision étroite (6) qui s'ouvre au niveau de la surface supérieure (41) et s'étend vers l'intérieur dans la direction radiale de pneu.

7. Pneu, **caractérisé en ce qu'**il comprend la bande de roulement selon l'une quelconque des revendications 1 à 6.

# FIG.1

# FIG.2

# FIG.3

## (A)

## (B)

# FIG.4

# FIG.5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004034902 A
- JP H05058117 A
- JP 2011088544 A
- JP 2013169827 A
- EP 1961587 A1
- EP 1625950 A1

**Non-patent literature cited in the description**

- Japanese Dictionary of Snow and Ice - New Edition. Japanese Society of Snow and Ice, 248